# EUROPEAN PATENT APPLICATION

(11) **EP 2 832 437 A1**
(43) Date of publication of application: **04.02.2015**
(21) Application number: 13769899.9
(22) Date of filing: 15.03.2013
(51) Int. Cl.: B01F 17/14, A23L 1/035, A23L 1/24, A23L 2/62, B01F 17/56, B01J 13/00

(54) **EMULSIFIED DISPERSANT AND EMULSIFIED COMPOSITION**

(30) Priority: 28.03.2012 JP 2012075026
(71) Applicant: Ajinomoto Co., Inc., Tokyo 104-8315 (JP); Kanagawa University, Yokohama-shi, Kanagawa 221-8686 (JP)
(72) Inventor: HARADA, Fumiko, Kawasaki-shi Kanagawa 210-8681 (JP); MASHIMO, Daisuke, Kawasaki-shi Kanagawa 210-8681 (JP); MORI, Osamu, Kawasaki-shi Kanagawa 210-8681 (JP); TAJIMA, Kazuo, Yokohama-shi Kanagawa 221-8686 (JP); IMAI, Yoko, Yokohama-shi Kanagawa 221-8686 (JP); YAMAGUCHI, Susumu, Kawasaki-shi Kanagawa 210-8681 (JP)
(74) Representative: Nicholls, Kathryn Margaret
(86) International application number: PCT/JP2013/057521
(87) International publication number: WO 2013/146387

(57) **Abstract**

The present invention aims to provide an emulsifying dispersant capable of stably dispersing a large amount of oil even when used in a small amount, and an emulsion composition containing same, and further aims to provide an emulsion composition showing high emulsion stability even when added to a food or drink containing an electrolyte, which can be used for a final product without the need for a complicated operation.

The present invention provides an emulsifying dispersant, comprising an amphipathic substance and an electrolyte, wherein the amphipathic substance forms two or more layers, and an emulsion composition containing same. The present invention also provides a food or drink containing said emulsion composition and a production method thereof, as well as a method of forming a three-phase emulsion by utilizing said emulsifying dispersant.

## Description

### Technical Field

The present invention relates to an emulsifying dispersant and an emulsion composition containing same. In addition, the present invention relates to a food or drink containing said emulsion composition and a production method thereof, as well as a method of forming a three-phase emulsion by utilizing said emulsifying dispersant.

### Background Art

For an emulsion composition processed to be able to disperse an oil-soluble functional component in a liquid food (e.g., emulsion flavor and emulsion preparation), a technique for preparing an emulsion composition capable of blending an oil-soluble functional component as much as possible and stably is advantageous in terms of cost.

On the other hand, in an emulsion composition having a high mixing ratio of oil-soluble components, the total area of the oil-water interface increases, along with which the interfacial energy increases. Generally, since the basic principle of emulsion stability is lowering of the interfacial energy in the oil-water interface, stable production of such emulsion composition requires a large amount of an emulsifier. However, emulsifiers for food have a peculiar off-flavor and a bitter taste resulting from fatty acid as a starting material, and therefore, use of a large amount of an emulsifier causes sensory problems.

Also, it is known that an emulsion composition to be added to food shows an unstable emulsification state due to the components such as an electrolyte and the like contained in the food. Heretofore, a technique for emulsifying a large amount of oil without an influence of an electrolyte in the food has been proposed (patent document 1). However, the emulsion stability of such emulsion composition when added to water was evaluated only 1 hr later, and the stability thereof is not entirely sufficient. Therefore, industrial utilization of the technique is considered to be actually difficult.

In the meantime, phospholipid is a representative lipid present in the biomembrane of the cells, blood and the like of living organisms. Since phospholipid is superior in the biodegradability, physiological mildness and emulsifying power, it is utilized for not only food but also in the fields of pharmaceutical product, pesticide, cosmetic agent and the like. Phospholipid is soluble in organic solvents and insoluble in water. When dispersed in water, phospholipid is known to form a lyotropic liquid crystal wherein hydrophilic group moiety and hydrophobic group moiety are regularly oriented to exhibit a lamellar structure. The bilayer membrane of the phospholipid is utilized as an emulsifier, and ultrasonication, solvent substitution and the like afford a spherical endoplasmic reticulum called vesicle (non-patent document 1). An emulsifying method utilizing the endoplasmic reticulum as an emulsifiying dispersant (three-phase emulsifying method) has been proposed (patent documents 2, 3).

In the three-phase emulsifying method, the emulsifyin method is achieved by attaching an endoplasmic reticulum of an amphipathic compound, which is present as an independent phase in the oil/amphipathic compound/water system, to the surface of an oil droplet (oil phase) by a Van der Waals force. In the three-phase emulsifying method, a high interfacial tension of the oil-water interface is important for the attachment of endoplasmic reticulum, where the relationship is opposite to the principle of the stability in conventional emulsifying methods. Moreover, the attached endoplasmic reticulum does not easily detach from the oil-water interface. Utilizing the three-phase emulsifying method, therefore, a stable emulsion composition can be obtained even without using a large amount of an emulsifier.

When the above-mentioned three-phase emulsifying method is applied to dairy products (particularly, drinks containing milk), an emulsification technique using polyglycerol ester of fatty acid as an emulsifying dispersant instead of the above-mentioned phospholipid has been disclosed, and high emulsion stability is obtained (patent document 4). In this emulsification technique, however, a high-pressure homogenizer treatment is performed after addition to drinks, thus requiring re-dispersion of the emulsion composition. When an emulsion composition is added to various foods or drinks, use of a powerful homogenizing apparatus such as a high-pressure homogenizer is often unattainable in practice. Therefore, provision of an emulsion composition that does not require an operation such as a homogenizing treatment and the like after addition to a final product is strongly demanded.

### [Document List]

### [patent documents]

patent document 1: US-B-2011/0033413
patent document 2: JP-B-3855203
patent document 3: JP-B-4552198
patent document 4: JP-A-2011-234697

### [non-patent document]

non-patent document 1: Japan Oil Chemists' Society ed., Gendai Kaimen Koroido Kagaku no Kiso Maruzen

### SUMMARY OF THE INVENTION

### Problems to be Solved by the Invention

The present invention has an object to provide an emulsifying dispersant capable of stably dispersing a large amount of oil even when used in a small amount, and an emulsion composition containing same, and further objects to provide an emulsion composition showing high emulsion stability even when added to a food or drink containing an electrolyte, which can be used for a final product without the need for a complicated operation.

### Means of Solving the Problems

The present inventors studied, as an emulsifying method capable of stabilizing a large amount of oil with a small amount, an emulsifying method using, as an emulsifying dispersant, an endoplasmic reticulum wherein phospholipid and sucrose fatty acid ester (sugar ester) form a lamellar structure. However, when the obtained emulsion composition was added to an electrolyte-containing food, it was found that oil delamination occurred and the oil could not be dispersed stably.

The present inventors have conducted intensive studies in an attempt to solve the aforementioned problems and found that addition of an electrolyte in advance during preparation of an emulsifying dispersant allows for stable emulsification of an electrolyte-containing food. They have conducted further studies and completed the present invention.

Accordingly, the present invention is as follows.
[1] An emulsifying dispersant, comprising an amphipathic substance and an electrolyte, wherein the amphipathic substance forms two or more layers.
[2] The emulsifying dispersant of [1], which forms an endoplasmic reticulum.
[3] The emulsifying dispersant of [2], wherein the endoplasmic reticulum attaches to a surface of an oil droplet.
[4] The emulsifying dispersant of [2] or [3], wherein the endoplasmic reticulum has a particle size of 8 - 800 nm.
[5] The emulsifying dispersant of any of [1] - [4], wherein the content of the electrolyte is 0.01 - 0.8M.
[6] The emulsifying dispersant of any of [1] - [5], wherein the electrolyte is an acid.
[7] The emulsifying dispersant of [6], wherein the acid is an organic acid.
[8] The emulsifying dispersant of [7], wherein the organic acid is at least one selected from the group consisting of citric acid, malic acid and ascorbic acid.
[9] The emulsifying dispersant of any of [1] - [5], wherein the electrolyte is a salt.
[10] The emulsifying dispersant of [9], wherein the salt is at least one selected from the group consisting of magnesium chloride, sodium chloride and sodium glutamate.
[11] The emulsifying dispersant of any of [1] - [10], wherein the amphipathic substance is phospholipid and/or fatty acid ester.
[12] The emulsifying dispersant of any of [1] - [11] for forming a three-phase emulsion.
[13] An emulsion composition comprising the emulsifying dispersant of any of [1] - [12] and an oily component.
[14] The emulsion composition of [13], affording an emulsion particle size of 0.5 - 60 µm.
[15] The emulsion composition of [13] or [14], having a thickened aqueous phase.
[16] The emulsion composition of any of [13] - [15], wherein the oily component comprises a functional component.
[17] The emulsion composition of any of [13] - [16], wherein the oily component comprises capsinoids.
[18] The emulsion composition of any of [13] - [16], wherein the oily component comprises a flavor.
[19] A production method of a food or drink, comprising a step of adding the emulsion composition of any of [13] - [18].
[20] A food or drink comprising the emulsion composition of any of [13] - [18].
[21] The food or drink of [20], wherein the content of the electrolyte is 1 µM - 0.1 M.
[22] The food or drink of [21], wherein the electrolyte is an acid or a salt.
[23] The food or drink of any of [20] - [22], comprising a thickened aqueous phase.
[24] The food or drink of any of [20] - [23], which is a drink, liquid food or gelled food.
[25] The food or drink of [24], wherein the liquid food has water activity of not less than 0.6.
[26] A method of producing an emulsifying dispersant, comprising a step of adding a component containing an amphipathic substance and an electrolyte, stirring the mixture and cooling the mixture.
[27] The method of [26], wherein the emulsifying dispersant is for forming a three-phase emulsion.

### Effect of the Invention

According to the emulsifying dispersant of the present invention, a large amount of oil can be stably dispersed with a small amount of the dispersant used. The emulsion composition obtained by the present invention is not easily influenced by an electrolyte, even when added to a food or drink containing an electrolyte, and shows high emulsion stability. In addition, the emulsion composition obtained by the present invention can be utilized for a final product without a need for a complicated operation such as a high-pressure homogenizer treatment and the like. The present invention is effective for suppressing oil delamination in an electrolyte-containing food or drink.

### Brief Description of the Drawings

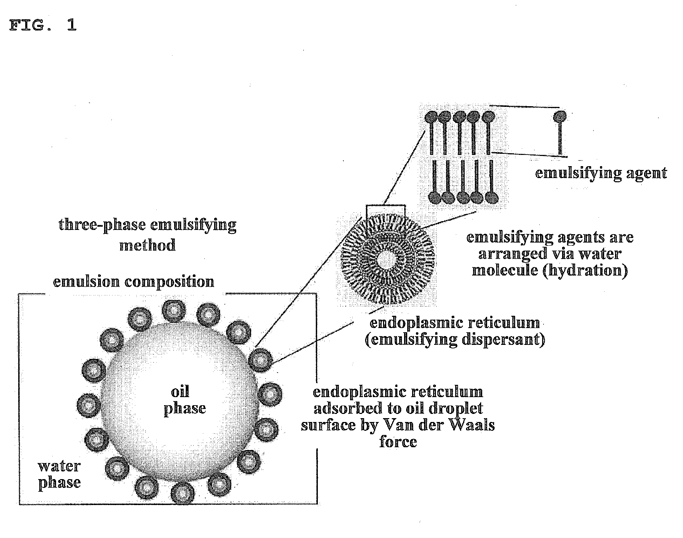

Fig. 1 shows the constitution of an emulsion composition by three-phase emulsifying method.

### Description of Embodiments

The emulsifying dispersant of the present invention characteristically comprises an electrolyte. In the present invention, the "electrolyte" refers to a substance which is separated into cation and anion when dissolved in a solvent. Examples of such electrolyte include acid, base, salt and the like. In the present invention, the electrolyte is preferably an acid or salt. More preferably, the electrolyte is an acid.

Examples of the acid to be contained in the emulsifying dispersant of the present invention include, but are not limited to, inorganic acids such as hydrochloric acid, phosphoric acid, carbonic acid, nitric acid, nitrous acid, sulfuric acid, sulfurous acid, boric acid and the like, and organic acids such as citric acid, malic acid, ascorbic acid, acetic acid, lactic acid, fumaric acid, succinic acid, tartaric acid, gluconic acid, benzoic acid, sorbic acid, adipic acid, oxalic acid, propionic acid, glutamic acid, aspartic acid, guanylic acid, inosinic acid, fatty acid and the like. The acid to be used may be one, or a combination of two or more kinds. As the acid, a commercially available product can be preferably used, or an acid produced by a method known per se or a method analogous thereto can also be used. In the present invention, the acid is preferably an organic acid. The organic acid is preferably citric acid, malic acid or ascorbic acid.

While the salt to be contained in the emulsifying dispersant of the present invention is not particularly limited, examples thereof include metal salt, ammonium salt, salt with organic base, salt with inorganic acid, salt with organic acid, salt with basic or acidic amino acid and the like. The salt to be used may be one, or a combination of two or more kinds. As the salt, a commercially available product can be preferably used, or a salt produced by a method known per se or a method analogous thereto can also be used. In the present invention, the salt is preferably a metal salt. Preferable examples of the metal salt include salts with the first group metal of the periodic table (alkali metal salts) such as sodium salt, potassium salt and the like; salts with the second group metal of the periodic table such as calcium salt, magnesium salt, barium salt and the like; aluminum salt and the like. Specific examples of the salts with the first group metal include sodium chloride, sodium glutamate, potassium chloride, trisodium citrate, sodium hydrogen carbonate and the like. Specific examples of the salts with the second group metal include magnesium chloride, calcium chloride and the like. Among these, sodium chloride, sodium glutamate and magnesium chloride are preferable in the present invention.

The electrolyte to be contained in the emulsifying dispersant of the present invention can correspond to the kind of the electrolyte contained in foods, drinks and the like. For example, when the electrolyte contained in the food, drink and the like is an acid, the electrolyte contained in the emulsifying dispersant of the present invention can be an acid. The electrolyte contained in the emulsifying dispersant of the present invention may be different in the kind from the electrolyte contained in the food, drink and the like.

While the content of the electrolyte in the emulsifying dispersant of the present invention is not particularly limited, it is generally not less than 0.01 M, preferably not less than 0.1 M, of the whole emulsifying dispersant. While the content of the electrolyte is not particularly limited, it is generally not more than 0.8 M, preferably not more than 0.6 M, of the whole emulsifying dispersant. When the content is within the above-mentioned range, an oily component tends to be stably dispersed without being influenced by the electrolyte contained in the food, drink and the like. When the content is not more than 0.8 M, the production cost of the emulsifying dispersant can be reduced.

The emulsifying dispersant of the present invention also contains an amphipathic substance. The "amphipathic substance" in the present invention means a molecule having both a hydrophilic group and a hydrophobic group.

The content of the amphipathic substance is generally 0.005 - 45 wt%, preferably 0.1 - 20 wt%, more preferably 0.5 - 10 wt%, of the total amount of the emulsifying dispersant of the present invention.

A preferable example of the amphipathic substance in the present invention is phospholipid. In the present invention, the "phospholipid" means a lipid having a phosphoester moiety in the chemical structure. The phospholipid may be extracted and purified from a naturally occurring substance, or artificially synthesized chemically. A commercially available product can be preferably used as the phospholipid.

While the phospholipid contained in the emulsifying dispersant of the present invention is not particularly limited, specific examples thereof include phosphatidylcholine, phosphatidylethanolamine, phosphatidylinositol, phosphatidic acid, phosphatidylserine, sphingomyelin and the like. The phospholipid to be used may be one, or two or more kinds may be combined. Among these, phosphatidylcholine and phosphatidylethanolamine are preferable in the present invention.

In the present invention, the phospholipid may be a substance capable of containing one, or two or more kinds of the specific compounds exemplified above. Examples of such phospholipid include lecithin and the like. Examples of the naturally occurring substance to be the starting material of lecithin include soybean, egg-yolk, corn, sunflower, rape, sesame, cow and the like. In the present invention, lecithin obtained from two or more kinds of naturally occurring substances can also be used in combination. Among these, soybean lecithin is particularly preferable in the present invention.

The content of the phospholipid is generally 0.05 - 30 wt%, preferably 0.1 - 10 wt%, more preferably 0.5 - 5 wt%, of the total amount of the emulsifying dispersant of the present invention. When the content of the phospholipid is within the above-mentioned range, a large amount of oil can be stably dispersed in water with ease.

The weight ratio of the above-mentioned electrolyte and phospholipid is generally electrolyte:phospholipid=0.01:1 - 10:1, preferably 0.05:1 - 6:1, more preferably 0.1:1 - 3:1. When the weight ratio of the both is within the above-mentioned range, the electrolyte contained in the food, drink and the like can be made less influential.

Another preferable example of the amphipathic substance contained in the emulsifying dispersant of the present invention is fatty acid ester. Specific examples of the fatty acid ester include sucrose fatty acid ester, glycerin fatty acid ester, sorbitan fatty acid ester, propylene glycol fatty acid ester and the like. Of these, sucrose fatty acid ester is most preferable. The fatty acid ester preferably has a given level of water solubility. When the water solubility is too high, it dissolves in water and tends to fail in forming the structure of the emulsifying dispersant of the present invention. On the other hand, when the water solubility is too low, it shows degraded dispersibility in water and tends to fail in forming the structure of the emulsifying dispersant of the present invention. As the index of the water solubility of fatty acid ester, HLB, fatty acid chain length of constituent fatty acid, intramolecular esterification degree, polymerization degree of a hydrophilic group and the like can be mentioned. Specifically, HLB is preferably 7 - 16, the fatty acid chain length of the constituent fatty acid is preferably 14 - 18, and the intramolecular esterification degree is preferably 1 - 3. In the present invention, fatty acid ester may be used singly, or two or more kinds may be combined. Preferably, fatty acid ester is used in combination with the above-mentioned phospholipid. As the fatty acid ester, a commercially available product can be preferably used, or it can be produced by a method known per se or a method analogous thereto.

The content of the fatty acid ester is generally 0.005 - 15 wt%, preferably 0.1 - 10 wt%, more preferably 0.5 - 5 wt%, of the total amount of the emulsifying dispersant of the present invention. When the content is within the above-mentioned range, a large amount of oil can be efficiently dispersed in water.

The weight ratio of the above-mentioned electrolyte and fatty acid ester is generally electrolyte:fatty acid ester=0.007:1 - 6:1, preferably 0.03:1 - 4:1, more preferably 0.07:1 - 1:1. When the weight ratio of the both is within the above-mentioned range, the electrolyte contained in the food or drink can be made less influential.

Other examples of the amphipathic substance to be contained in the emulsifying dispersant of the present invention include fatty acid salt and the like. In addition, the emulsifying dispersant of the present invention may further contain, as other components, water; alcohols such as glycerol, ethanol and the like; saccharides such as sucrose and the like; sugar alcohols such as multitol, sorbitol and the like; thickened polysaccharides such as xanthan gum, agar and the like; seasoning; preservative; flavor; dye; antioxidant and the like.

In the emulsifying dispersant of the present invention, the amphipathic substance characteristically forms two or more layers. When the amphipathic substance forms layers, they are formed such that the hydrophobic groups of the amphipathic substances are opposed, though it is not particularly limited. Therefore, the number of the layers in the present invention can be an even number, which is 2, 4, 6, 8, 10 or more. While the number of the layers in the present invention is not particularly limited, it is preferably an even number of 100 or less. The thickness (long spacing) of the bilayer membrane of the amphipathic substance is not particularly limited since it varies depending on the kind of the amphipathic substance and additive. For example, it is not more than 20 nm. When a mixture of phospholipid and fatty acid ester is used as an amphipathic substance, the thickness is generally about 3 - 10 nm. The thickness of the bilayer membrane layer of the amphipathic substance can be measured by TEM observation or an X-ray diffraction apparatus. A model of the layer formed by the amphipathic substance is shown in Fig. 1.

In the present invention, the amphipathic substance can form two or more layers, and can simultaneously form an endoplasmic reticulum (vesicle) wherein said layer is an outer shell. In the present invention, the endoplasmic reticulum is also referred to as a closing endoplasmic reticulum, since the layer of the amphipathic substance constitutes an outer shell. Without a particular limitation, the amphipathic substance can spontaneously form an endoplasmic reticulum. In the present invention, electrolyte can be contained, for example, during the preparation of the endoplasmic reticulum and the like. While the inside of the endoplasmic reticulum (encapsulated substance) is not particularly limited, it may contain other components (water etc.) mentioned above.

The above-mentioned endoplasmic reticulum can attach to a surface of an oil droplet (oil phase). In the present specification, the "attach" here means the state where an endoplasmic reticulum is in contact with a surface of an oil droplet, and such attachment can be confirmed by observing with an atomic force microscope (AFM). While the attachment of the endoplasmic reticulum to a surface of an oil droplet is not particularly limited, it is generally performed by an interaction based on the Van der Waals force. Moreover, while the surface of the endoplasmic reticulum is not particularly limited, a hydrophobic group of the amphipathic substance is present, and the hydrophilic group attaches to the surface of the oil droplet. The above-mentioned endoplasmic reticulum attaches to a surface of an oil droplet and characteristically expresses an emulsifying action when an oil phase is emulsified (dispersed in water) by the use of the emulsifying dispersant of the present invention.

While the particle size of the above-mentioned endoplasmic reticulum is not particularly limited, it is generally 8 - 800 nm, preferably 50 - 500 nm, more preferably 80 - 300 nm. When the particle size is within the above-mentioned range, the endoplasmic reticulum can efficiently attach to a surface of an oil droplet. Since the endoplasmic reticulum may be finely granulated in the step of emulsion formation, the particle size can be set to 200 - 800 nm at the time of preparation of the emulsifying dispersant of the present invention. In this way, the particle size of the endoplasmic reticulum can fall within a preferable range at the time of the emulsion formation. In this case, all endoplasmic reticula do not necessarily have a particle size of 200 - 800 nm, and endoplasmic reticula having a concentration within the range of 5 - 20 wt% in a dispersion liquid only need to have such particle size.

The particle size of the endoplasmic reticulum can be measured by diluting an endoplasmic reticulum dispersion liquid to achieve a suitable transmittance and measuring by a laser diffraction/scattering particle size distribution analyzer (LA-920, manufactured by HORIBA) (relative refractive index: 120A000I). A sample having viscosity and containing foams can be measured after a sonication treatment for 3 min for deaeration, thereby reducing a measurement error.

The production method of the emulsifying dispersant of the present invention includes a step of appropriately blending the aforementioned various components and stirring the blend. While the temperature of the emulsifying dispersant during the preparation is not particularly limited, it is generally 40 - 90°C, preferably 50 - 80°C, more preferably 60 - 70°C. Various kinds of components are stirred generally at 300 - 15000 rpm, preferably 500 - 12000 rpm, more preferably 1000 - 10000 rpm, though not particularly limited, and a commercially available stirring device can be used. While the stirring time is not particularly limited, it is generally 1 - 30 min, preferably 5 - 20 min, more preferably 10 - 15 min.

After stirring as mentioned above, the mixture is cooled. Cooling is preferably performed at a given temperature. While the temperature condition is not particularly limited, it is generally -20 to 40°C, preferably 0 to 30°C, more preferably 5 to 25°C. Cooling and temperature rising may be repeated several times. A specific cooling method is free of particular limitation and, for example, the mixture may be cooled with stirring by a suitable stirrer, or may be left standing and allowed to cool. The cooling times may be appropriately determined according to the temperature condition, cooling method and the like, and is not particularly limited. It is generally 10 min - 2 days, preferably 30 min - 1 day, more preferably 3 hr - 12 hr.

As the timing of addition of an electrolyte to various components of the emulsifying dispersant, (1) before stirring various components, (2) before cooling after stirring, (3) before emulsifying after cooling, and the like can be mentioned. Preferred is (1) before stirring various components.

The emulsifying dispersant of the present invention can be preferably utilized for three-phase emulsifying method. The three-phase emulsifying method is an emulsifying method by forming a three-phase structure of an aqueous phase, an emulsifying dispersant phase and an oil phase in a solution containing water and oil. Specifically, the emulsifying dispersant phase is formed as an endoplasmic reticulum of an amphipathic substance contained in the emulsifying dispersant. The endoplasmic reticulum attaches to a surface of an oil droplet by the Van der Waals force to form an oil particle by covering the oil droplet, whereby the oil is now dispersed in water. An example of the constitution of an emulsion composition by the three-phase emulsifying method is shown in Fig. 1.

Utilizing the three-phase emulsifying method, long-term stabilization of an emulsion can be designed by preventing easy aggregation by thermal collision without lowering the interfacial energy due to compatibility, unlike surfactants used conventionally. In addition, an emulsion can be formed with a small amount of an emulsifier based on the above-mentioned three-phase structure.

As mentioned above, since the emulsifying dispersant of the present invention is preferably utilized for three-phase emulsifying method, the emulsifying dispersant is preferably used for formation of a three-phase emulsion. The "three-phase emulsion" in the present invention means an emulsion having a three-phase structure of an aqueous phase, an emulsifying dispersant phase and an oil phase, which is obtained by three-phase emulsifying method. The aforementioned phospholipid is a particularly preferable material for the emulsifying dispersant of the present invention, since it forms a lyotropic liquid crystal wherein hydrophilic group moiety and hydrophobic group moiety are regularly oriented to exhibit a lamellar structure.

The present invention also provides an emulsion composition containing an emulsifying dispersant of the present invention and an oily component. As described above, the emulsifying dispersant of the present invention can form an endoplasmic reticulum, and the endoplasmic reticulum covers the surface of the oily component and can disperse the oily component in water (aqueous phase).

The content of the emulsifying dispersant of the present invention is generally 10 - 90 wt%, preferably 20 - 70 wt%, more preferably 30 - 50 wt%, of the total amount of the emulsion composition. When the content is within the above-mentioned range, a large amount of oil (oil component) can be stably dispersed with ease.

While the aqueous phase in the emulsion composition of the present invention is not particularly limited, it is preferably thickened. When the aqueous phase is thickened, rising of emulsion particles containing the emulsifying dispersant of the present invention and an oily component can be suppressed. For example, when emulsion particles surface and contact with the air, dehydration may occur in the emulsifying dispersant phase constituting the emulsion particles to induce decomposition (disintegration) of the emulsifying dispersant phase. In this case, the surface of the oil droplet covered by the emulsifying dispersant phase is exposed and possibly aggregated with other exposed oil droplets to consequently produce oil delamination. Since the use object of the thickened aqueous phase is as mentioned above, such viscosity of the aqueous phase is applicable to not only the emulsion composition of the present invention but also a substance containing the emulsion composition of the present invention (e.g., the below-mentioned food or drink etc.).

While the viscosity of the aqueous phase is not particularly limited, it is generally 0.8 mPa·s - 100 Pa·s, preferably 10 mPa·s - 100 Pa·s, more preferably 80 mPa·s - 100 Pa·s, further preferably 400 mPa·s - 10 Pa·s, still more preferably 800 mPa·s - 3 Pa·s. The viscosity of the aqueous phase can be measured by a dynamic viscoelasticity measuring apparatus ARES (manufactured by TA INSTRUMENTS) (Geometry Cone 50 mm, Cone Angle 0.00394 radians, Shear Rate 50 1/s).

The viscosity of the aqueous phase of the emulsion composition of the present invention may be adjusted by conferring viscosity to water contained in the emulsifying dispersant of the present invention, or by separately adding viscose water to the emulsion composition of the present invention. While the method for increasing the viscosity of the aqueous phase is not particularly limited, for example, a thickener may be added to the aqueous phase and the like. Examples of the thickener to be used include, but are not limited to, polysaccharides and derivatives thereof such as xanthan gum, gum arabic, guar gum, locust bean gum, gellan gum, gum ghatti, pectin, agar, carrageenan, chitosan, starch, processing starch, dextrin, cellulose, cellulose derivative and the like; protein such as gelatin, polyglutamic acid and the like; and the like.

While the emulsion particle size of the emulsion composition of the present invention is not particularly limited, it is generally 0.2 - 60 µm, preferably 0.5 - 60 µm, more preferably 0.5 - 51 µm, particularly preferably 0.5 - 20 µm, most preferably 0.5 - 8 µm. By decreasing the emulsion particle size, rising of the emulsion particles can be suppressed. This is because the resulting oil delamination is prevented as described above. On the other hand, when the emulsion particle size is too small, the specific surface area of the oil-water interface becomes large, the reactivity of the oily component or oil-soluble substance, and oxygen, water or water-soluble component increases, and decomposition reaction, degradation reaction and the like tend to occur easily. While the emulsion particle size of the emulsion composition of the present invention is not particularly limited, for example, it can be adjusted by the kind of an emulsification apparatus and emulsification conditions, or by passing through a filter with a given pore size and the like. The emulsion particle size of the emulsion composition of the present invention can be measured by diluting the emulsion composition to achieve a suitable transmittance and measuring by a laser diffraction/scattering particle size distribution analyzer (LA-920, manufactured by HORIBA) (relative refractive index: 120A000I). A sample with partial oil delamination is lightly shaken up and down with a hand for homogenization to minimize a measurement error and can be gently sampled from the center thereof while avoiding naturally-floating oil droplets. An average of three measurements is used for evaluation.

Examples of the oily component contained in the emulsion composition of the present invention include, but are not limited to, plant-derived fats and oils such as soybean oil, coconut oil, rice oil, corn oil, palm oil, safflower oil, rape seed oil (e.g., canola oil etc.), olive oil and the like; middle chain saturated fatty acid triglycerides composed of a fatty acid containing a saturated fatty acid having a carbon number of 6-10 (e.g., capric acid, caprylic acid etc.) as a main constituent component and glycerol (hereinafter to be also referred to as "MCT"); animal fats and oils such as beef fat, lard, chicken fat, and fish oil and the like; fatty acids such as oleic acid and the like; a mixture of these and the like. As a specific gravity adjuster, sucrose acetate isobutyrate (SAIB) and the like can also be added. The oily component to be used may be one or a combination of two or more kinds. As the oily component, a commercially available product can be preferably used, or an oily component produced by a method known per se or a method analogous thereto can also be used. In the present invention, the oily component is preferably MCT, a mixture of MCT and SAIB or plant-derived fats and oils (more preferably rape seed oil, particularly preferably canola oil).

The content of the oily component is generally 10 - 90 wt%, preferably 20 - 80 wt%, more preferably 40 - 70 wt%, of the total amount of the emulsion composition of the present invention. When the content is within the above-mentioned range, stable dispersion can be achieved by the emulsifying dispersant of the present invention.

In the present invention, the oily component may or may not contain an oil-soluble substance. Preferably, it contains an oil-soluble substance. While an oil-soluble substance to be used is not particularly limited, a functional component that can be an active ingredient of foods and drinks, pharmaceutical products, cosmetic agents and the like is preferable. As used herein, the "functional component" refers to (i) a component expected to induce a given physiological effect in a living organism when it is applied to the living organism, (ii) a component that imparts color, taste, aroma, flavor, texture and the like perceivable by a sensory organ, and (iii) a component that modifies the physical properties or chemical properties of an oily component. Specific examples of the functional component include, but are not limited to, capsinoids; oil-soluble vitamins such as liver oil, vitamin A, vitamin A oil, vitamin D₃, vitamin B₂ butyrate, ascorbic acid fatty acid ester, natural vitamin E mixture, vitamin K and the like; oil-soluble dyes such as paprika pigment, annatto pigment, tomato pigment, calendula pigment, β-carotene, astaxanthin, canthaxanthin, lycopene, chlorophyll and the like; flavors such as orange oil, peppermint oil, spearmint oil, cinnamon oil and the like; plant essential oils such as limonene, linalool, nerol, citronellol, geraniol, citral, 1-menthol, eugenol, cinnamicaldehyde, anethole, perillaldehyde, vanillin, γ-undecalactone and the like; coenzyme Q₁₀; α-lipoic acid; ω-3 fatty acids such as α-linolenic acid, eicosapentaenoic acid, docosahexaenoic acid and the like; ω-6 fatty acids such as linoleic acid, γ-linolenic acid and the like; physiologically active components such as phytosterol and the like; flavor oils such as Welsh onion oil, chicken oil, garlic oil, pepper flavor oil and the like; various seasoning oil components such as beef taste, pork taste, chicken taste and the like; medical medicament, cosmetic component and the like. As the oil-soluble substance, a commercially available product can be preferably used, or an oil-soluble substance produced by a method known per se or a method analogous thereto can also be used. In the present invention, the oil-soluble substance is preferably capsinoid; oil-soluble vitamin such as vitamin A, ascorbic acid fatty acid ester and the like; plant essential oil such as limonene and the like; or ω-3 fatty acid. Examples of the capsinoid include capsiate, dihydrocapsiate (e.g., synthetic dihydrocapsiate and the like that can be produced by the method described in JP-A-2008-529475 or a method analogous thereto), nordihydrocapsiate, vanillyl decanoate, vanillyl nonanoate, vanillyl octanoate and the like. It is possible to utilize, though not particularly limited to, an extract from the substance described in JP-A-2011-132176 and pepper (e.g., refined pepper oil and the like that can be produced by the method described in WO 2006/043601 or a method analogous thereto) and the like.

The content of the oil-soluble substance is not particularly limited, and can be appropriately determined according to the kind of the substance to be used. In one embodiment, the content is 0.01 - 90 wt%, preferably 0.03 - 50 wt%, more preferably 0.1 - 13 wt%, of the total amount of the emulsion composition of the present invention.

The production method of the emulsion composition of the present invention is not particularly limited, and the emulsion composition can be prepared by appropriately blending various components (the emulsifying dispersant of the present invention, oily component etc.) to be contained therein and stirring the mixture. When an oil-soluble substance is used, the oil-soluble substance is preferably dissolved in the oily component in advance. While the temperature of the emulsion composition during preparation is not particularly limited, it is generally 10 - 60°C, preferably 15 - 40°C, more preferably 20 - 30°C. While stirring of the various components is not particularly limited, it is generally performed at 500 - 12000 rpm, preferably 2000 - 10000 rpm, more preferably 3000 - 6000 rpm, for which a commercially available stirring apparatus such as a homomixer, a Nauta mixer and the like can be used. While the stirring time is not particularly limited, it is generally 3 - 60 min, preferably 4 - 30 min, more preferably 5 - 15 min. A commercially available emulsifying apparatus such as a high-pressure homogenizer, an ultrasonication emulsifier and the like can be used.

The emulsion composition of the present invention can be utilized for, though not particularly limited to, a food or drink. Therefore, the present invention provides a production method of a food or drink, comprising a step of adding the aforementioned emulsion composition of the present invention. The present invention also provides a food or drink containing the aforementioned emulsion composition of the present invention.

The food or drink, for which the emulsion composition of the present invention is utilizable, preferably contains an electrolyte. When a food or drink containing an electrolyte is the target of utilization, an emulsifying dispersant contained in the emulsion composition of the present invention can act more effectively in an oily component dispersion. The electrolyte to be contained in a food or drink is an acid, a base, a salt or the like, preferably an acid or a salt, more preferably an acid. Examples of the acid and salt are similar to those explained with regard to the emulsifying dispersant of the present invention.

The pH of the food or drink, for which the emulsion composition of the present invention is utilizable, is not particularly limited. It is, for example, 3 - 8, preferably 3 - 7.

When a food or drink contains an electrolyte, the content of the electrolyte is generally 1 µM - 3 M, preferably 1 µM - 0.2 M, more preferably 1 µM - 0.1 M, of the whole food or drink. The content of the electrolyte in a food or drink here includes the content of the electrolyte contained in the emulsion composition of the present invention.

The content of the electrolyte in a food or drink can also be adjusted by the ratio of the content of the electrolyte in the emulsifying dispersant of the present invention. In this case, the ratio of them in a molar ratio is, for example, electrolyte in the emulsifying dispersant of the present invention:electrolyte in food or drink = 0.0003:1 - 900:1, preferably 0.025:1 - 800:1, more preferably 0.1:1 - 100:1. As mentioned above, the content of the electrolyte in a food or drink includes the amount of the electrolyte contained in the emulsion composition of the present invention.

While a food or drink to which the emulsion composition of the present invention is added is not particularly limited, a food or drink permitting use of the emulsion technique is preferable, and the emulsion composition of the present invention is specifically preferable for drinks, liquid foods, and gelled foods. In the present invention, the "liquid food" refers to a food in a liquid state at ambient temperature (e.g., 15 - 25°C). The aforementioned term "liquid state" also encompasses the concept of a slurry state. In the present invention, the water activity of the liquid food is, though not particularly limited to, preferably not less than 0.6, more preferably not less than 0.85, further more preferably not less than 0.9. While the water activity of the liquid food is not particularly limited, it is generally not more than 1.0. When the water activity is within the above-mentioned range, the emulsion stability can be improved further. The water activity can be measured by rotronic water activity measurement system Aw-pro (AWVC-DIO type, manufactured by GSI Creos Corporation) at 25°C. A food or drink containing the emulsion composition of the present invention may be produced by a production method including a step of adding an emulsion composition, or the emulsion composition of the present invention itself may be directly used as a food or drink.

Examples of the foods and drinks for which the emulsion composition of the present invention is utilizable include, but are not limited to, drinks, such as soft drinks or carbonated drinks added with fruit juice, vitamins, amino acids, flavor, saccharides, acid, base, salts and the like, tea drinks, coffee drinks, milk, mineral water and the like; gelled food such as jelly, jelly drinks, purine, yoghurt, cream, jam and the like; flavor seasoning such as instant bouillon, consomme and the like; liquid seasoning such as dressing, sauce, mayonnaise and the like; processing food such as soup and the like; frozen dessert such as ice cream, ice candy and the like; confectionery such as cake, cookie, chocolate, candy, chewing gum and the like; and the like. Besides these, the emulsion composition of the present invention is utilizable for bakery, seafood processed food, meat processed food, retort food, frozen food and the like. Also, the emulsion composition of the present invention is also utilizable for the fields of food with health claims such as food for specified health uses, food with nutrient function claims and the like; dietary supplement; medical food and the like. Furthermore, the emulsion composition of the present invention is also utilizable for baby food and infant food.

The method and conditions for adding the emulsion composition of the present invention to a food or drink and mixing same is not particularly limited, and they can be appropriately determined according to the kind of food or drink and the like. The emulsion composition of the present invention is generally added during the production of a food or drink, but it may also be added after production of a food or drink.

### Examples

The present invention is explained in more detail by referring to Examples. The following Example specifically explains one embodiment of the present invention, and does not limit the present invention thereto.

### [Starting materials used]

In all cases, food-grade or food additive-grade starting materials were used.

**Table 1**

| 1. Emulsifier | | |
|---|---|---|
| | trade name | maker |
| lecithin | SLP-white | Tsuji Oil Mills Co., Ltd. |
| sugar ester (sucrose fatty acid ester) | M-1695 | Mitsubishi-Kagaku Foods Corporation |

**Table 2**

| 2. Electrolyte | | | |
|---|---|---|---|
| | component name | trade name | maker |
| citric acid | citric acid (1 hydrate) | citric acid (crystal) | Wako Pure Chemical Industries, Ltd. |
| malic acid | DL-malic acid | DL-malic acid | Wako Pure Chemical Industries, Ltd. |
| ascorbic acid | L-ascorbic acid | vitamin C | SERACHEM Co., Ltd |
| magnesium chloride | magnesium chloride (6 hydrate) | magnesium chloride | KANTO CHEMICAL Co., Inc. |
| sodium chloride | sodium chloride | NAKURU F-L | Naikai Salt Industries Co., LTD |
| sodium glutamate | sodium glutamate | Ajinomoto RC | Ajinomoto Co., Inc. |

### 3. Water

Ion exchange water purified by Water Purifier (Auto Still WG259, manufactured by Yamato) was used.

**Table 3**

| 4. Oil (oily component and oil-soluble substance) | | | |
|---|---|---|---|
| | abbreviation | trade name | maker |
| refined pepper oil | - | - | Ajinomoto Co., Inc. |
| medium-chain triglyceride | MCT | Liponate GC | LIPO CHEMICALS INC. |
| medium-chain triglyceride | MCT | MT-N | Kao Corporation |
| canola oil | - | SARASARA Canola Oil | Ajinomoto Co., Inc. |
| limonene | - | - | Givaudan Japan K.K. |

**[Table 4]**

| 5. Others | | | |
|---|---|---|---|
| component name | trade name | maker | use object |
| sucrose | granulated sugar | Nissin Sugar Co., Ltd. | control of specific gravity of aqueous phase |
| aspartame/L-phenylalanine compound | ASPARTAME (100%) | Ajinomoto Co., Inc. | sweetener |
| acesulfame potassium | Sannet | Kirin Kyowa Foods Co., Ltd. | sweetener |
| agar | INAGEL N-688 | Ina Food Industry Co., Ltd. | thickening of aqueous phase |
| potassium sorbate | potassium sorbate "MARUPI" granule | Sumitomo Dainippon Pharma Co., Ltd. | preservative |

### 6. Preparation of refined pepper oil

The refined pepper oil described in Table 3 was prepared according to the method described in WO2006/043601.

### Experimental Example 1. Study of concentration of electrolyte added to emulsifying dispersant

The concentration of the electrolyte to be added to the emulsifying dispersant was studied. As the electrolyte, citric acid often used for drinks was used and added within the range of 0 - 0.8 M. The contents of the blend are shown in Table 5 below.

As mentioned below, preparation of an emulsifying dispersant, preparation of an oil phase, preparation of an emulsion composition, and adjustment of an emulsion particle size (membrane treatment) were performed. The obtained emulsion composition was measured and placed in a beaker, which was diluted to 0.3 wt% with citric acid/sodium hydrogen carbonate buffer (citric acid 0.1 M solution adjusted to pH 3.2 with sodium hydrogen carbonate), and mixed by stirring with a stirrer. For calculation of a median size increase rate of the emulsion particle size, a sample diluted with ion exchange water instead of buffer was also prepared. Since buffer has a higher specific gravity than ion exchange water, it was considered to possibly exert an adverse influence on the emulsion stability. Thus, sucrose was added to both ion exchange water and buffer to achieve the same specific gravity (specific gravity measurement values were not recorded). Each sample (60 g) was filled in a 100-ml glass bottle and the bottle was tightly sealed. To prevent growth of microorganism, the bottle was sterilized by heating at 85°C for 10 min, and cooled with running water. The bottles were stood at room temperature for 9 days, the emulsion particle size (median size) was measured by the below-mentioned method, and the median size increase rate of the emulsion particle size was calculated.

**[Table 5]**

| Contents of blend of emulsifying dispersant unit: wt% | | | | | | |
|---|---|---|---|---|---|---|
| | Comp. Ex. 1 | Ex. 1 | Ex. 2 | Ex. 3 | Ex. 4 | Ex. 5 |
| soybean lecithin | 2.00 | 2.00 | 2.00 | 2.00 | 2.00 | 2.00 |
| sugar ester | 3.00 | 3.00 | 3.00 | 3.00 | 3.00 | 3.00 |
| citric acid | 0.00 | 0.210 | 2.10 | 10.5 | 12.6 | 16.8 |
| water | balance | balance | balance | balance | balance | balance |
| total | 100 | 100 | 100 | 100 | 100 | 100 |

**[Table 6]**

| Contents of blend of oil phase (common in Examples 1 - 5, Comparative Example 1) unit: wt% | |
|---|---|
| | amount |
| refined pepper oil | 14.5 |
| Liponate GC | 85.5 |
| total | 100 |

The median size of the emulsifying dispersant and the median size increase rate of the emulsion particle size were calculated, and the results are shown in Table 7 below.

Examples 1 - 5 having a citric acid concentration of 0.01 - 0.8 M showed a smaller median size increase rate than the control (Comp. Ex. 1), and an emulsion stabilizing effect.

**[Table 7]**

| | concentration of citric acid added to emulsifying dispersant | median size of emulsifying dispersant | median size increase rate |
|---|---|---|---|
| Comp. Ex. 1 | 0M | 144nm | 104% |
| Ex. 1 | 0.01M | No data | 99% |
| Ex. 2 | 0.1M | No data | 101% |
| Ex. 3 | 0.5M | No data | 101% |
| Ex. 4 | 0. 6M | 105nm | 101% |
| Ex. 5 | 0.8M | 124nm | 102% |

### Experimental Example 2. Study of kind of electrolyte added to emulsifying dispersant - 1

The kind of the electrolyte to be added to the emulsifying dispersant was studied. As the electrolyte, an electrolyte (acid and salt) often used for drinks was selected. They were added, and emulsifying dispersants (Comparative Example 2, Examples 6 - 9) were prepared. The contents of the blend are shown in Table 8 below.

As mentioned below, preparation of an emulsifying dispersant, preparation of an oil phase, preparation of an emulsion composition, and adjustment of an emulsion particle size (membrane treatment) were performed. The obtained emulsion composition was measured and placed in a beaker, which was diluted to 0.3 wt% with a solution of each electrolyte, and mixed by stirring with a stirrer. For calculation of a median size increase rate of the emulsion particle size, a sample diluted with ion exchange water instead of a solution of each electrolyte was also prepared. Since a solution of each electrolyte has a higher specific gravity than ion exchange water, it was considered to possibly exert an adverse influence on the emulsion stability. Thus, sucrose was added to ion exchange water to adjust to a specific gravity of 1.007. Each sample (50 g) was filled in a 100-ml glass bottle and the bottle was tightly sealed. To prevent growth of microorganism, the bottle was sterilized by heating at 85°C for 10 min, and cooled with running water. The bottles were stood at room temperature for 6 days, the emulsion particle size (median size) was measured by the below-mentioned method, and the median size increase rate of the emulsion particle size was calculated.

**[Table 8]**

| Contents of blend of emulsifying dispersant unit: wt% | | | | | |
|---|---|---|---|---|---|
| | Comp. Ex. 2 | Ex. 6 | Ex. 7 | Ex. 8 | Ex. 9 |
| electrolyte concentration (M) | | 0.100 | 0.100 | 0.100 | 0.0468 |
| electrolyte concentration (wt%) | | 2.10 | 1.34 | 1.76 | 0.952 |
| soybean lecithin | 2.00 | 2.00 | 2.00 | 2.00 | 2.00 |
| sugar ester | 3.00 | 3.00 | 3.00 | 3.00 | 3.00 |
| citric acid | | 2.10 | | | |
| malic acid | | | 1.34 | | |
| ascorbic acid | | | | 1.76 | |
| magnesium chloride | | | | | 0.952 |
| water | balance | balance | balance | balance | balance |
| total | 100 | 100 | 100 | 100 | 100 |

**[Table 9]**

| Contents of blend of oil phase (common in Examples 6 - 9 and Comparative Example 2) unit: wt% | |
|---|---|
| | amount |
| refined pepper oil | 1.45 |
| Liponate GC | 98.55 |
| total | 100 |

The median size of the emulsifying dispersant and the median size increase rate of the emulsion particle size were calculated, and the results are shown in Table 10 below.

Examples 6 - 9 added with citric acid, malic acid, ascorbic acid or magnesium chloride showed a smaller median size increase rate than the control (Comp. Ex. 2), and an emulsion stabilizing effect.

**[Table 10]**

| | Comp. Ex. 2 | Ex. 6 | Ex. 7 | Ex. 8 | Ex. 9 |
|---|---|---|---|---|---|
| electrolyte added to emulsifying dispersant | - | citric acid | malic acid | ascorbic acid | magnesium chloride |
| electrolyte concentration | 0M | 0.100M | 0.100M | 0.100M | 0.0468M |
| median size of emulsifying dispersant | 262 nm | 138 nm | 137 nm | 145 nm | 142 nm |
| median size increase rate | 108% | 103% | 103% | 101% | 104% |

### Experimental Example 3. Study of kind of electrolyte added to emulsifying dispersant - 2

The kind of the electrolyte to be added to the emulsifying dispersant was studied. As the electrolyte, sodium glutamate and sodium chloride, which are used for food or drink at high frequency, were selected. They were added, and emulsifying dispersants were prepared. The contents of the blend are shown in Table 11 below.

As mentioned below, preparation of an emulsifying dispersant, preparation of an oil phase, and preparation of an emulsion composition were performed. The obtained emulsion composition was measured and placed in a beaker, which was diluted to 0.5 wt% with a sodium glutamate 0.1M solution, and mixed by stirring with a stirrer. For calculation of a median size increase rate of the emulsion particle size, a sample diluted with ion exchange water instead of a sodium glutamate solution was also prepared. Since a sodium glutamate solution has a higher specific gravity than ion exchange water, it was considered to possibly exert an adverse influence on the emulsion stability. Thus, sucrose was added to ion exchange water to adjust to the same specific gravity (1.053) as that of the sodium glutamate solution. Each sample (100 g) was filled in a 100-ml glass bottle and the bottle was tightly sealed. To prevent growth of microorganism, the bottle was sterilized by heating at 85°C for 10 min, and cooled with running water. The bottles were stood at room temperature for 7 days, the emulsion particle size (median size) was measured, and the median size increase rate of the emulsion particle size was calculated.

**[Table 11]**

| Contents of blend of emulsifying dispersant unit: wt% | | | | |
|---|---|---|---|---|
| | Comp. Ex. 3 | Ex. 10 | Ex. 11 | Ex. 12 |
| electrolyte concentration (M) | | 0.01 | 0.01 | 0.01 |
| electrolyte concentration (wt%) | | 1.61 | 0.58 | 2.10 |
| soybean lecithin | 2.00 | 2.00 | 2.00 | 2.00 |
| sugar ester | 3.00 | 3.00 | 3.00 | 3.00 |
| sodium glutamate | | 1.61 | | |
| sodium chloride | | | 0.58 | |
| citric acid | | | | 2.10 |
| water | balance | balance | balance | balance |
| total | 100 | 100 | 100 | 100 |

**[Table 12]**

| Contents of blend of oil phase (common in Examples 10 - 12 and Comparative Example 3) unit: wt% | |
|---|---|
| | amount |
| refined pepper oil | 0.5 |
| Liponate GC | 99.5 |
| total | 100 |

The median size of the emulsifying dispersant and the median size increase rate of the emulsion particle size were calculated, and the results are shown in Table 13 below.

Examples 10 - 12 added with sodium glutamate, sodium chloride or citric acid showed a smaller median size increase rate than the control (Comp. Ex. 3), and an emulsion stabilizing effect.

**[Table 13]**

| | Comp. Ex. 3 | Ex. 10 | Ex. 11 | Ex. 12 |
|---|---|---|---|---|
| electrolyte added to emulsifying dispersant | - | sodium chloride | sodium glutamate | citric acid |
| electrolyte concentration of emulsifying dispersant | 0M | 0.01M | 0.01M | 0.01M |
| median size of emulsifying dispersant | 123nm | 148nm | 122nm | No data |
| median size increase rate | 130% | 109% | 105% | 99% |

### Experimental Example 4. Study of electrolyte concentration of liquid food to be added with emulsion composition

Whether the emulsion stability of a liquid food changes by the concentration of the electrolyte contained therein was studied. As a model of a liquid food, citric acid/sodium hydrogen carbonate buffer (citric acid 0 - 0.1M solution adjusted to pH 3.2 with sodium hydrogen carbonate) was used. The contents of the blend are shown in Table 14 below.

An emulsion composition was prepared using an emulsifying dispersant added with 0.1 M citric acid in advance (emulsifying dispersant of Example 2). The contents of the blend are shown in Table 15 below. Preparation of an emulsifying dispersant, preparation of an oil phase, preparation of an emulsion composition, and adjustment of the emulsion particle size (membrane treatment) were performed by the below-mentioned methods. The obtained emulsion composition was measured and placed in a beaker, which was diluted to 0.3 wt% with the buffers of Examples 14 and 15 shown in Table 14 below, and mixed by stirring with a stirrer. As a liquid food free of electrolyte, a sample diluted with ion exchange water (Example 13) instead of buffer was also prepared. Since buffer has a higher specific gravity than ion exchange water, it was considered to possibly exert an adverse influence on the emulsion stability. Thus, sucrose was added to both ion exchange water and buffer to achieve the same specific gravity (specific gravity measurement values were not recorded). Each sample (60 g) was filled in a 100-ml glass bottle and the bottle was tightly sealed. To prevent growth of microorganism, the bottle was sterilized by heating at 85°C for 10 min, and cooled with running water. The bottles were stood at room temperature for 9 days, and the appearance was evaluated (visual confirmation) by the below-mentioned method. Also, the emulsion particle size (median size) was measured and the median size increase rate of the emulsion particle size was calculated.

**[Table 14]**

| Contents of blend of buffer unit: wt% | | | |
|---|---|---|---|
| starting material | Ex. 13 | Ex. 14 | Ex. 15 |
| citric acid | 0.00 | 0.210 | 2.10 |
| sodium hydrogen carbonate | 0.00 | as appropriate hereinafter to be referred to as *1 | |
| sucrose | as appropriate *2 | | |
| total amount after addition of water | 100 | | |

| | | | |
|---|---|---|---|
| *1 added in amount to make pH 3.2 while measuring pH *2 added in amount to make the same specific gravity as when citric acid was 10.5 wt%, while measuring specific gravity | | | |

**[Table 15]**

| Contents of blend of emulsion composition unit: wt% | | |
|---|---|---|
| | starting material | amount |
| emulsifying dispersant of Example 2 | soybean lecithin | 1.00 |
| | sugar ester | 1.50 |
| | citric acid | 1.05 |
| | water | 46.45 |
| oil phase | refined pepper oil | 7.25 |
| | Liponate GC | 42.75 |
| total | | 100.0 |

The results of appearance evaluation and the calculation results of median size increase rate are shown in Table 16 below.

The median size increase rate of any of Examples 14 and 15 containing citric acid (0.01 M or 0.1 M) in the diluted solution and Example 13 free of citric acid was almost 100%, and the emulsion stabilizing effect was maintained.

**[Table 16]**

| | Ex. 13 | Ex. 14 | Ex. 15 |
|---|---|---|---|
| citric acid concentration of diluted solution | 0M | 0.01M | 0.1M |
| appearance | good | good | good |
| median size increase rate | 100% | 100% | 101% |

| | | | |
|---|---|---|---|
| good: trace amount of oil delamination was found but of the level unnoticed without close observation | | | |

### Experimental Example 5. Study of particle size of emulsion composition - 1

Using an emulsion composition having the same contents of blend, the emulsion particle size showing high emulsion stability was studied.

Preparation of an emulsifying dispersant and preparation of an oil phase were performed by the below-mentioned methods. The contents of blend of the emulsion composition and the outline of the emulsifying method are shown in the following Tables 17 and 18, respectively. The emulsion particle size was controlled to be different (0.5 µm, 8 µm) even when the contents of the blend were the same, by changing the emulsification equipment and emulsification conditions. The obtained emulsion composition was measured and placed in a beaker, which was diluted to 0.3 wt% with a pH 3.5 model drink as a liquid food model and mixed by stirring with a stirrer. The contents of the blend of the pH 3.5 model drink are shown in the following Table 19. Each sample was filled in a 100-ml glass bottle and the bottle was tightly sealed. To prevent growth of microorganism, the bottle was sterilized by heating at 85°C for 10 min, and cooled with running water. The bottles were stood at 55°C for 7 days, and the appearance was evaluated (visual confirmation) by the below-mentioned method.

**[Table 17]**

| Contents of blend of emulsion composition unit: wt% | | |
|---|---|---|
| | starting material | amount |
| emulsifying dispersant of Example 1 | soybean lecithin | 1.00 |
| | sugar ester | 1.50 |
| | citric acid | 0.105 |
| | water | balance |
| oil phase | refined pepper oil | 7.25 |
| | Liponate GC | 42.75 |
| total | | 100.0 |

**[Table 18]**

| emulsifying method | | |
|---|---|---|
| | Ex. 16 | Ex. 17 |
| emulsification equipment | high-pressure homogenizer | high-pressure homogenizer |
| emulsification conditions | pressure 10 MPa 6 pass | pressure 0 MPa 10 pass |

| | | |
|---|---|---|
| high-pressure homogenizer: APV LAB 1000 (sold by SMT Corporation) disper: T.K. homodisper 2.5 type (manufactured by PRIMIX Corporation) | | |

**[Table 19]**

| Contents of blend of pH 3.5 model drinks unit: wt% | |
|---|---|
| starting material | amount |
| emulsion composition | 0.300 |
| citric acid | 2.30 |
| trisodium citrate | 0.107 |
| Aspartame/L-phenylalanine compound | 0.173 |
| acesulfame potassium | 0.0740 |
| total amount of water added | 100.0 |

The results of the appearance evaluation are shown in the following Table 20.

Whether the emulsion particle size (median size) of the emulsion composition was 0.5 µm or 8 µm, the emulsion composition of the present invention was emulsion-stable in the pH 3.5 model drink.

**[Table 20]**

| | Ex. 16 | Ex. 17 |
|---|---|---|
| emulsion particle size (median size) | 0.5 µm | 8 µm |
| appearance | good | good |

| | | |
|---|---|---|
| good: trace amount of oil delamination was found but of the level unnoticed without close observation | | |

### Experimental Example 6. Study of particle size of emulsion composition - 2

Using an emulsion composition having the same contents of blend, the emulsion particle size showing high emulsion stability was studied.

Preparation of an emulsifying dispersant and preparation of an oil phase were performed by the below-mentioned methods. The contents of blend of the emulsion composition and the outline of the emulsifying method are shown in the above-mentioned Tables 17 and the following 21, respectively. The emulsion particle size was controlled to be different (median size 15, 20, 30, 42, 51 µm) even when the blending rate was the same, by changing the emulsifying method and emulsification conditions.

**[Table 21]**

| | Ex. 18 | Ex. 19 | Ex. 20 | Ex. 21 | Ex. 22 |
|---|---|---|---|---|---|
| emulsifying method | stirred with TK disper | stirred with stirrer and magnetic stirrer | | | |
| emulsification conditions | 2000 rpm, 3 min | 1000 rpm 20 min | 1000 rpm 10 min | 1000 rpm 5 min | 1000 rpm 3 min |
| emulsion particle size | 15 µm | 20 µm | 30 µm | 42 µm | 51 µm |

The emulsion composition was measured and mixed with a pH 3.5 model jelly to 0.3 wt% and homogenized. The pH 3.5 model jelly was prepared to have the same blending rate and production method as those used in Experimental Example 7 (described later). A jelly containing the emulsion composition was stood at 44°C for 14 days stand, and the appearance was evaluated (visual confirmation) by the below-mentioned method.

The results of the appearance evaluation are shown in the following Table 22.

Whether the emulsion particle size (median size) of the emulsion composition was 15 µm, 20 µm, 30 µm, 42 µm or 51 µm, the emulsion composition of the present invention was emulsion-stable in the pH 3.5 model jelly.

**[Table 22]**

| | Ex. 18 | Ex. 19 | Ex. 20 | Ex. 21 | Ex. 22 |
|---|---|---|---|---|---|
| emulsion particle size (median size) | 15 µm | 20 µm | 30 µm | 42 µm | 51 µm |
| appearance | best | best | best | best | best |

| | | | | | |
|---|---|---|---|---|---|
| best: completely no oil delamination | | | | | |

### Experimental Example 7. Study of viscosity of food or drink added with emulsion composition (gelled food)

Using an emulsion composition having the same contents of blend, a food or drink showing high emulsion stability was studied. In general, since the emulsion stability tends to increase in a food having high viscosity, an emulsion composition was added to a gelled food, and compared with the addition to a drink.

Preparation of an emulsifying dispersant, preparation of an oil phase and preparation of an emulsion composition were performed by the below-mentioned methods (adjustment of the emulsion particle size (membrane treatment) was not performed). The contents of the blend of the emulsion composition used are shown in Table 23 below.

**[Table 23]**

| Contents of blend of emulsion composition unit: wt% | starting material | amount |
|---|---|---|
| emulsifying dispersant of Example 2 | soybean lecithin | 1.00 |
| | sugar ester | 1.50 |
| | citric acid | 1.05 |
| | water | 46.45 |
| oil phase | synthesis dihydrocapsiate | 0.43 |
| | Liponate GC | 49.57 |
| total | | 100.0 |

Synthetic dihydrocapsiate was synthesized by dehydration condensation of vanillyl alcohol and 8-methyl nonanoic acid by using an immobilized enzyme and according to the method described in JP-A- 2008-529475, and purified.

The emulsion composition was measured and mixed with each of a pH 3.5 model drink (contents of blend were as mentioned above), mayonnaise ("Pure Select KOKUUMA", manufactured by Ajinomoto Co., Inc.), and a pH 3.5 model jelly, to 0.3 wt% and homogenized.

The sample of the pH 3.5 model drink was filled and tightly sealed in a 100-ml glass bottle, sterilized by heating at 85°C for 10 min to prevent growth of microorganisms, and cooled to room temperature with running water (Example 23).

Mayonnaise was placed in a plastic pouch together with the emulsion composition, the pouch was tightly sealed, and rubbed well with hands for homogeneous mixing (Example 24).

The pH3.5 model jelly was prepared by adding potassium sorbate to citric acid 0.01M-sodium hydrogen carbonate buffer (pH 3.5), heating the mixture at 90 - 95°C, adding agar while stirring the mixture at 400 - 600 rpm by a three-one motor, and incubating the mixture at 80 - 95°C for 10 min to dissolve the agar. The weight difference was measured before and after heating, water was added in an evaporated amount and mixed. The obtained jelly solution was cooled to 40 - 50°C by stirring at 300 - 600 rpm by a three-one motor. The emulsion composition was measured in a 50 ml plastic tube, the jelly solution was fill to 99.3 wt% and the tube was tightly sealed, which was vigorously stirred by shaking with hands, and the mixture was homogenized by stirring by a vortex mixer for 10 seconds (Example 25). The contents of blend of the sample of the pH3.5 model jelly are shown in the following Table 24.

The above-mentioned 3 kinds of foods and drinks were stood at 44°C for 14 days, and the appearance was evaluated (visual confirmation) by the below-mentioned method.

**[Table 24]**

| Contents of blend of pH3.5 model jelly unit: wt% | amount |
|---|---|
| emulsion composition | 0.300 |
| agar | 4.00 |
| potassium sorbate | 0.100 |
| 0.01M citric acid/sodium hydrogen carbonate buffer | 95.6 |
| total | 100 |

The results of the appearance evaluation are shown in the following Table 25.

The emulsion composition was emulsion-stable in the pH3.5 model drink, and the appearance was good. The emulsion composition was emulsion-stable in the 2.07 Pa·s (viscosity under 44°C conditions) mayonnaise, and the appearance was best. The emulsion composition was emulsion-stable at 0.82 Pa·s (viscosity under 44°C conditions) in the pH3.5 model jelly, and the appearance was best.

**[Table 25]**

| | Ex. 23 | Ex. 24 | Ex. 25 |
|---|---|---|---|
| food or drink | pH3.5 model drink | mayonnaise | pH3.5 model jelly |
| appearance | good | best | best |

| | | | |
|---|---|---|---|
| good: trace amount of oil delamination was found but of the level unnoticed without close observation best: completely no oil delamination | | | |

### Experimental Example 8. Study of kind of oily component used for emulsion composition

The kind of an oily component to be used for the emulsion composition was studied. As the oily component, medium-chain triglyceride (trade name: MT-N) and a canola oil were used. The contents of the blend are shown in Table 26 below.

As mentioned below, preparation of an emulsifying dispersant, preparation of an oil phase, and preparation of an emulsion composition were performed. The obtained emulsion composition was measured and placed in a beaker, which was diluted to 0.5 wt% with a citric acid 0.1 M solution, and mixed by stirring with a stirrer. For calculation of a median size increase rate of the emulsion particle size, a sample diluted with ion exchange water instead of a citric acid solution was also prepared. Since a citric acid solution has a higher specific gravity than ion exchange water, it was considered to possibly exert an adverse influence on the emulsion stability. Thus, sucrose was added to ion exchange water to adjust to the same specific gravity (1.013) as that of the citric acid solution. Each sample (100 g) was filled in a 100-ml glass bottle and the bottle was tightly sealed. To prevent growth of microorganism, the bottle was sterilized by heating at 85°C for 10 min, and cooled with running water. The bottles were stood at room temperature for 7 days, the emulsion particle size (median size) was measured by the below-mentioned method, and the median size increase rate of the emulsion particle size was calculated.

**[Table 26]**

| Contents of blend of emulsion composition unit: wt% | | | | | |
|---|---|---|---|---|---|
| | starting material | Comp. Ex. 4 | Ex. 26 | Comp. Ex. 5 | Ex. 27 |
| emulsifying dispersant | soybean lecithin | 1.00 | 1.00 | 1.00 | 1.00 |
| | sugar ester | 1.50 | 1.50 | 1.50 | 1.50 |
| | citric acid | | 0.105 | | 0.105 |
| | water | balance | balance | balance | balance |
| oil phase | refined pepper oil | 0.26 | 0.26 | 0.26 | 0.26 |
| | MT-N | 49.74 | 49.74 | | |
| | canola oil | | | 49.74 | 49.74 |
| total | | 100.0 | 100.0 | 100.0 | 100.0 |

The calculation results of the median size increase rate of the emulsion particle size are shown in Table 27 below.

The emulsion compositions of Examples 26 and 27 using MT-N or canola oil showed a decreased median size increase rate in the citric acid 0.1 M solution, and an emulsion stabilizing effect.

**[Table 27]**

| | Comp. Ex. 4 | Ex. 26 | Comp. Ex. 5 | Ex. 27 |
|---|---|---|---|---|
| addition of citric acid to emulsifying dispersant | not added | added | not added | added |
| median size increase rate | 352% | 103% | 247% | 115% |

### Experimental Example 9. Study of oil phase free of oil-soluble substance or oil phase containing flavor

An emulsion composition free of an oil-soluble substance in an oil phase and an emulsion composition containing a flavor (limonene) as an oil-soluble substance were studied.

As mentioned below, preparation of an emulsifying dispersant, preparation of an oil phase, and preparation of an emulsion composition were performed. The obtained emulsion composition was measured and placed in a beaker, which was diluted to 0.5 wt% with a citric acid 0.1 M solution, and mixed by stirring with a stirrer. For calculation of s median size increase rate of the emulsion particle size, a sample diluted with ion exchange water instead of a citric acid solution was also prepared. Since a citric acid solution has a higher specific gravity than ion exchange water, it was considered to possibly exert an adverse influence on the emulsion stability. Thus, sucrose was added to ion exchange water to adjust to the same specific gravity (1.013) as that of the citric acid solution. Each sample (100 g) was filled in a 100-ml glass bottle and the bottle was tightly sealed. The bottles were stood at room temperature for 7 days, the emulsion particle size (median size) was measured by the below-mentioned method, and the median size increase rate of the emulsion particle size was calculated.

**[Table 28]**

| Contents of blend of emulsion composition unit: wt% | | | | | |
|---|---|---|---|---|---|
| | starting material | Comp. Ex. 6 | Ex. 28 | Comp. Ex. 7 | Ex. 29 |
| emulsifying dispersant | soybean lecithin | 1.00 | 1.00 | 1.00 | 1.00 |
| | sugar ester | 1.50 | 1.50 | 1.50 | 1.50 |
| | citric acid | | 0.105 | | 0.105 |
| | water | balance | balance | balance | balance |
| oil phase | MT-N | 50 | 50 | 49.5 | 49.5 |
| | limonene | | | 0.5 | 0.5 |
| total | | 100.0 | 100.0 | 100.0 | 100.0 |

The calculation results of the median size increase rate of the emulsion particle size are shown in Table 29 below.

The emulsion composition free of an oil-soluble substance in an oil phase and the emulsion composition containing a flavor (limonene) as an oil-soluble substance showed a decreased median size increase rate in the citric acid 0.1 M solution and an emulsion stabilizing effect.

**[Table 29]**

| | Comp. Ex. 6 | Ex. 28 | Comp. Ex. 7 | Ex. 29 |
|---|---|---|---|---|
| addition of citric acid to emulsifying dispersant | not added | added | not added | added |
| median size increase rate | 308% | 149% | 208% | 148% |

### [Preparation of emulsifying dispersant]

Soybean lecithin, sugar ester, various electrolytes, and ion exchange water at 60 - 70°C were added in given weight fractions in a container, and dispersed therein. For dispersing various components, T.K. homomixer (MARK II 2.5 type, manufactured by PRIMIX Corporation) was used and the mixture was stirred at 5,000 - 10,000 rpm for 5 min, which was repeated twice. Thereafter, the obtained emulsifying dispersant was stood at ambient temperature for a half day and cooled.

### [Preparation of oil phase]

An oily component and an oil-soluble substance were added in a container at given weight fractions, and the mixture was homogenized by stirring with a stirrer.

### [Measurement of median size of emulsifying dispersant]

An emulsifying dispersant solution was diluted to achieve a suitable transmittance and measured by a laser diffraction/scattering particle size distribution analyzer (LA-920, manufactured by HORIBA) (relative refractive index: 120A000I). As for a viscose sample containing a foam, sonication was performed for 3 min, deaerated and then measured to minimize the measurement error.

### [Preparation of emulsion composition]

Emulsification was performed by the following method, unless otherwise specified.

An oil phase and an emulsifying dispersant were added in a container at a 1:1 weight ratio, two-phase partition of water and oil was confirmed and they were emulsified by stirring at 10,000 rpm for 5 min by a T.K. homomixer.

The emulsion composition obtained by the above-mentioned method showed inconsistent emulsion particle size due to an influence of the method and blending (8 µm - 15 µm). To closely compare the emulsion stability, inconsistent emulsion particle size needs to be suppressed as far as possible. Therefore, the emulsion particle size was adjusted by the following method.

### [Adjustment of emulsion particle size (membrane treatment)]

An emulsion composition (10 ml) obtained by the above-mentioned method was placed in a disposable syringe, a disposable-type filter unit (DISMIC-25CS, pore size 0.80 µm, cellulose acetate material, manufactured by ADVANTEC) was mounted. It was set on a syringe pump, and the emulsion composition was passed through a filter at a flow rate of 1 mL/min.

By this method, an emulsion composition having an emulsion particle size (median size) of 4 - 5 µm was obtained.

### [Evaluation of emulsion stability]

The emulsion stability was evaluated by the following method.

### [Visual confirmation]

When the oil delamination amount was clearly difference, the large amount of oil delamination was evaluated by visual observation. When the emulsion particles were flocculated, the evaluation was made after re-dispersing by gently shaking with hands.

When the difference in the oil delamination amount was a little and could not be distinguished, an emulsion particle size (median size) increase rate was calculated by the following method and the emulsion stability was evaluated.

### [Calculation of emulsion particle size (median size) increasing rate]

Basically, conventional emulsion compositions as in Comparative Example 1 do not show oil delamination or change in the emulsion particle size when diluted with ion exchange water. That is, they are emulsion-stable. On the other hand, when diluted with a solution containing a large amount of an electrolyte, the emulsion particle size increases as a sign of oil delamination. Utilizing this and taking the median size of a sample diluted with ion exchange water as 100%, the ratio of the median size of a sample diluted with a solution containing an electrolyte was calculated. That is, a ratio closer to 100% is more emulsion-stable.

In this study, when the emulsion particle size increase rate was smaller than that of the control (free of addition of electrolyte when preparing emulsifying dispersant), an emulsion stabilizing effect was judged to be present, and when the rate was greater than that, an emulsion stabilizing effect was judged to be absent.

### [Measurement of emulsion particle size (median size)]

An emulsion composition was diluted to achieve a suitable transmittance and measured by a laser diffraction/scattering particle size distribution analyzer (LA-920, manufactured by HORIBA) (relative refractive index: 120A000I). A sample with partial oil delamination was lightly shaken up and down with a hand for homogenization and gently sampled from the center thereof while avoiding naturally-floating oil droplets.

### Industrial Applicability

Using the emulsifying dispersant of the present invention, a large amount of an oily component can be stably dispersed in an aqueous medium containing an electrolyte, without the need for a complicated operation. In foods and drinks, pharmaceutical products, cosmetic agents and the like, electrolytes are often used for adjusting pH and the like, and a technique for efficient emulsion formation is desired. Therefore, the emulsifying dispersant and the like of the present invention are particularly useful in the fields of foods and drinks, pharmaceutical products, cosmetic agents and the like.

This application is based on patent application No. 2012-075026 filed in Japan (filing date: March 28, 2012), the contents of which are encompassed in full herein.

## Claims

1. An emulsifying dispersant, comprising an amphipathic substance and an electrolyte, wherein the amphipathic substance forms two or more layers.

2. The emulsifying dispersant according to claim 1, which forms an endoplasmic reticulum.

3. The emulsifying dispersant according to claim 2, wherein the endoplasmic reticulum attaches to a surface of an oil droplet.

4. The emulsifying dispersant according to claim 2 or 3, wherein the endoplasmic reticulum has a particle size of 8 - 800 nm.

5. The emulsifying dispersant according to any one of claims 1 to 4, wherein the content of the electrolyte is 0.01 - 0.8M.

6. The emulsifying dispersant according to any one of claims 1 to 5, wherein the electrolyte is an acid.

7. The emulsifying dispersant according to claim 6, wherein the acid is an organic acid.

8. The emulsifying dispersant according to claim 7, wherein the organic acid is at least one selected from the group consisting of citric acid, malic acid and ascorbic acid.

9. The emulsifying dispersant according to any one of claims 1 to 5, wherein the electrolyte is a salt.

10. The emulsifying dispersant according to claim 9, wherein the salt is at least one selected from the group consisting of magnesium chloride, sodium chloride and sodium glutamate.

11. The emulsifying dispersant according to any one of claims 1 to 10, wherein the amphipathic substance is phospholipid and/or fatty acid ester.

12. The emulsifying dispersant according to any one of claims 1 to 11 for forming a three-phase emulsion.

13. An emulsion composition comprising the emulsifying dispersant according to any one of claims 1 to 12 and an oily component.

14. The emulsion composition according to claim 13, affording an emulsion particle size of 0.5 - 60 µm.

15. The emulsion composition according to claim 13 or 14, having a thickened aqueous phase.

16. The emulsion composition according to any one of claims 13 to 15, wherein the oily component comprises a functional component.

17. The emulsion composition according to any one of claims 13 to 16, wherein the oily component comprises capsinoids.

18. The emulsion composition according to any one of claims 13 to 16, wherein the oily component comprises a flavor.

19. A production method of a food or drink, comprising a step of adding the emulsion composition according to any one of claims 13 to 18.

20. A food or drink comprising the emulsion composition according to any one of claims 13 to 18.

21. The food or drink according to claim 20, wherein the content of the electrolyte is 1 µM - 0.1 M.

22. The food or drink according to claim 21, wherein the electrolyte is an acid or a salt.

23. The food or drink according to any one of claims 20 to 22, comprising a thickened aqueous phase.

24. The food or drink according to any one of claims 20 to 23, which is a drink, liquid food or gelled food.

25. The food or drink according to claim 24, wherein the liquid food has water activity of not less than 0.6.

26. A method of producing an emulsifying dispersant, comprising a step of adding a component containing an amphipathic substance and an electrolyte, stirring the mixture and cooling the mixture.

27. The method according to claim 26, wherein the emulsifying dispersant is for forming a three-phase emulsion.
